# EUROPEAN PATENT SPECIFICATION

(11) **EP 2 820 276 B1**
(45) Date of publication and mention of the grant of the patent: **18.05.2016**
(21) Application number: 13712818.7
(22) Date of filing: 11.02.2013
(51) Int. Cl.: F02D 41/00, F02B 37/16

(54) **METHOD FOR OPERATING INTERNAL COMBUSTION ENGINE**
VERFAHREN ZUM BETREIBEN EINES VERBRENNUNGSMOTORS
PROCÉDÉ POUR FAIRE FONCTIONNER UN MOTEUR À COMBUSTION INTERNE

(30) Priority: 24.02.2012 FI 20125211
(43) Date of publication of application: 07.01.2015
(73) Proprietor: Wärtsilä Finland Oy, 65380 Vaasa (FI)
(72) Inventor: DELNERI, Diego, FI-65100 Vaasa (FI); RIZZETTO, Gino, I-34127 Trieste (IT); AXELSSON, Martin, FI-65280 Vasa (FI); SCROCCO, Pietro, I-10127 Torino (IT)
(74) Representative: Berggren Oy Ab
(86) International application number: PCT/FI2013/050148
(87) International publication number: WO 2013/124532

(56) References cited:
- EP-A1- 2 063 097
- EP-A1- 2 309 102
- DE-A1-102010 043 027
- US-A- 6 038 860

## Description

### Technical field of the invention

The present invention relates to a method for operating an internal combustion engine according to the preamble of claim 1.

### Background of the invention

Nitrogen oxide (NOx) emissions of internal combustion engines are subject to continuously tightening regulations. When IMO Tier III limits come into force in designated areas, NOx emissions of ships need to be cut by up to 75 percent from the IMO Tier II requirements.

In general, NOx emissions can be reduced by reducing the temperature in the combustion chamber. An effective way to reduce NOx emissions of an internal combustion engine is to use exhaust gas recirculation (EGR), where part of the exhaust gas is directed back to the cylinders of the engine. Since the heat capacity of the recirculated exhaust gas is higher than the heat capacity of air, the same amount of energy released by combustion leads to lower temperature increase in engines with EGR. Also the lower oxygen mass inside the cylinders and reduction of combustion speed help to achieve smaller temperature increase. An EGR system can be either external or internal. In an external EGR system exhaust gas is recirculated from the exhaust duct into the air intake duct. A drawback of an external EGR system is that impurities must be removed from the exhaust gas before introducing it back into the cylinders. This is the case especially when using heavy fuel oil (HFO). If the impurities are not removed from the recirculated exhaust gas, recirculation might cause damage to intercoolers, turbochargers, and other parts of the engine. On the other hand, exhaust gas purifiers make the EGR system more complicated. In an internal EGR system part of the exhaust gas is trapped within the cylinder or back-flow from the exhaust duct into the combustion chamber is utilised. Typically, the exhaust valves of a cylinder are opened for a short period of time after closing of the intake valves. Exhaust pressure needs to be higher than the pressure in the cylinder in order to get the exhaust gas to flow into the cylinder.

Another way to lower cylinder temperatures is to apply the so called Miller cycle, which utilizes modified intake valve closing timing. In compression ignition engines, the Miller cycle means advanced intake valve closing timing. When the intake valves are closed before the piston arrives at bottom dead center, pressure and temperature in the cylinder will be lower at the end of the compression stroke. The smaller amount of air in the cylinder due to the early closing of the intake valve is usually compensated by an adequate super-charge ratio. The use of the Miller cycle can be combined with an internal EGR system. Due to the reduced pressure in the cylinders, exhaust gas can flow from the exhaust manifold into the cylinders during the intake stroke when exhaust valves are opened. The amount of the recirculated exhaust gas can be controlled by the intake valve opening and closing timing. Early intake valve opening leads to better scavenging and smaller amount of recirculated exhaust gas. Early closing of intake valves increases the pressure difference between the exhaust duct and the cylinder and increases therefore the amount of recirculated exhaust gas. In conventional systems, a very early intake valve closing timing is needed for achieving a high EGR rate. Early intake valve closing leads to smaller cylinder fill and lower power output. To be able to increase the cylinder fill, the charge pressure needs to be increased. This leads to higher specific fuel oil consumption (SFOC).

### Summary of the invention

The object of the present invention is to provide an improved method for operating an internal combustion engine. The engine comprises an intake duct for introducing intake air into the cylinders of the engine, an exhaust port for each cylinder of the engine for guiding the exhaust gas from the cylinders into an exhaust duct, at least one turbocharger, which comprises a turbine and a compressor, at least one intake valve for each cylinder of the engine for opening and closing flow communication between the intake duct and the cylinder, at least one exhaust valve for each cylinder of the engine for opening and closing flow communication between the exhaust port and the cylinder, a by-pass duct, which is connected to the intake duct downstream from the compressor of the turbocharger and to the exhaust duct and upstream from the turbine of the turbocharger, and a by-pass valve for regulating air flow in the by-pass duct. The characterizing features of the method according to the present invention are given in the characterizing part of claim 1.

The method comprises at least two different operating modes, and at least in one operating mode the intake valves are closed during the intake stroke before bottom dead center for lowering pressure in the cylinder, internal exhaust gas recirculation (EGR) from the exhaust duct is used by reopening the exhaust valves after the closing of the intake valves and before bottom dead center for allowing exhaust gas recirculation from the exhaust duct into the cylinder, and water is injected into the exhaust ports for cooling the recirculated exhaust gas. According to the invention, different valve overlap durations are used in different operating modes for regulating the amount of the exhaust gas that is trapped within the cylinders and in at least one operating mode the by-pass valve is utilized for regulating the amount of the exhaust gas that is recirculated during the exhaust valve reopening.

By using the by-pass valve and different valve overlap durations for controlling the EGR rate, the desired level of NOx reduction can be achieved without a need for extremely early Miller timing. A very early intake valve closing timing would lead to decreased cylinder fill and power output. Increased charge pressure would be needed to compensate the reduced cylinder fill, and increased SFOC would result. The invention thus helps in achieving low NOx emissions without an unnecessary drop in the fuel efficiency. The injected water increases the heat capacity of the mixture in the cylinder and reduces the oxygen concentration, reducing thus effectively the NOx emissions.

According to an embodiment of the invention, when the amount of the recirculated exhaust gas needs to be increased and the pressure in the intake duct downstream from the compressor of the turbocharger is higher than the pressure in the exhaust duct upstream from the turbine of the turbocharger, the by-pass valve is opened for introducing air from the intake duct into the exhaust duct to increase the pressure in the exhaust duct.

According to another embodiment of the invention, the method comprises a first operating mode, in which operating mode the exhaust valve reopening is in use, a first valve overlap duration is in use, and the by-pass valve is used for regulating air flow from the intake duct into the exhaust duct to adjust the pressure in the exhaust duct. The first operating mode can be used when very low NOx emission limits are applied, for instance when IMO Tier III requirements are in force.

According to another embodiment of the invention, the method comprises a second operating mode, in which operating mode the exhaust valve reopening is not in use, the valve overlap duration is longer than in the first operating mode, and the by-pass valve is kept closed. The second operating mode can be used when the NOx limits are less strict than in the first operating mode, for instance when the IMO Tier II requirements are in force. With this operating mode, good compromise between the NOx emissions and the SFOC can be achieved.

According to another embodiment of the invention, the method comprises a third operating mode, in which operating mode the exhaust valve reopening is in use, a first valve overlap duration is in use, and the by-pass valve is kept closed. This operating mode can be used when very low NOx emission limits are applied, and the engine load is very low.

### Brief description of the drawings

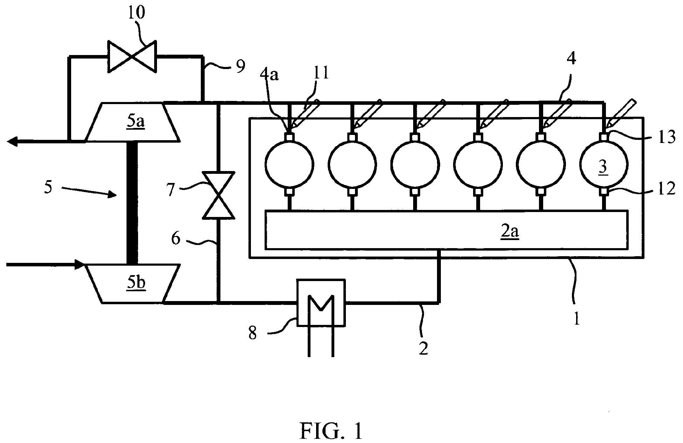

Fig. 1 shows schematically a turbocharged internal combustion engine.

### Detailed description of the invention

Embodiments of the invention are now described in more detail with reference to the accompanying drawings.

In figure 1 is shown schematically a turbocharged internal combustion engine 1. The engine 1 is a large internal combustion engine, such as a main or an auxiliary engine of a ship. In the embodiment of the figure, the engine 1 comprises six cylinders 3 that are arranged in line, but the engine 1 could comprise any reasonable number of cylinders 3. The cylinders 3 could also be arranged, for instance, in a V-configuration. The engine 1 comprises an intake duct 2 for introducing intake air into the cylinders 3 of the engine 1. An air receiver 2a, from which the pressurized intake air is supplied into the cylinders 3, forms part of the intake duct 2. Exhaust gas is guided out of the cylinders 3 through exhaust ports 4a into an exhaust duct 4. The engine 1 is provided with a turbocharger 5. The turbocharger 5 comprises a turbine 5a and a compressor 5b. Exhaust gas is guided through the turbine 5a of the turbocharger 5 for rotating the compressor 5a, which pressurizes the intake air. The engine 1 could also comprise a plurality of turbochargers. If high charge pressure is needed, the engine 1 could be provided with two turbochargers that are arranged in series. A V-engine could be provided with one or two turbochargers for each bank of the engine.

Before introducing the pressurized intake air into the air receiver 2a, the intake air is guided in the intake duct 2 through a charge air cooler 8. Each cylinder 3 of the engine 1 is provided with at least one intake valve 12 for opening and closing the flow communication between the air receiver 2a and the cylinder 3. The engine 1 also comprises at least one exhaust valve 13 for each cylinder 3 for opening and closing the flow communication between the cylinder 3 and the exhaust port 4a. The engine 1 further comprises a by-pass duct 6, which is provided with a by-pass valve 7. The first end of the by-pass duct 6 is connected to the intake duct 2 downstream from the compressor 5b of the turbocharger 5 and upstream from the charge air cooler 8. The second end of the by-pass duct 6 is connected to the exhaust duct 4 upstream from the turbine 5a of the turbocharger 5. Through the by-pass duct 6, air can be introduced from the intake duct 2 into the exhaust duct 4. The by-pass duct 6 can be used for introducing excess intake air into the exhaust system to prevent compressor surge. If the engine 1 comprised two turbochargers that were connected in series, the by-pass duct 6 could be connected to the intake duct 2 downstream from all the compressors of the turbochargers, and to the exhaust duct 4 upstream from all the turbines of the turbochargers. The engine 1 is also provided with a waste gate duct 9, which comprises a waste gate valve 10. Through the waste gate duct 10, part of the exhaust gas can be guided to the downstream side of the turbine 5a of the turbocharger 5 when needed.

The engine 1 is provided with means for variable intake valve opening (VIO) and closing (VIC). The engine can also be provided with means for variable exhaust valve opening and closing. The intake valve opening and closing arrangement can be, for instance, an electro-hydraulic system, or a cam-driven mechanism that is provided with hydraulic means for adjusting the valve timing. A similar arrangement can be used for variable exhaust valve opening and closing. Variable intake valve closing timing makes it possible to utilize the Miller cycle in the engine 1. In the Miller cycle, the intake valves 12 are closed during the intake stroke before bottom dead center. When the intake valve 12 is closed before the piston arrives at bottom dead center, pressure and temperature in the cylinder 3 will be lower at the end of the compression stroke. This lowers combustion temperature in the cylinder 3 and NOx emissions of the engine 1 are reduced. Variable intake valve opening timing and/or variable exhaust valve closing timing allows the use of different intake and exhaust valve overlaps during the exhaust stroke. With a longer valve overlap, better scavenging is achieved. If the intake valves 12 are opened only when the piston has arrived at top dead center or shortly before that, more exhaust gas is trapped within the cylinder 3. Also an early closing of the exhaust valves 13 increases the amount of the trapped exhaust gas. The engine 1 is also provided with means for opening the exhaust valves 13 during the intake stroke. The exhaust valve opening arrangement can be, for instance, an electro-hydraulic system, or a cam-driven mechanism that is provided with hydraulic means for switching the re-opening mode on and off. The means for reopening the exhaust valves 13 during the intake stroke enable the use of internal exhaust gas recirculation, where part of the exhaust gas is introduced through the exhaust valves 13 from the exhaust duct 4 and exhaust ports 4a back into the cylinders 3 of the engine 1. When the EGR from the exhaust duct 4 is in use, the exhaust valves 13 are reopened for a short period of time after the intake valves 12 have been closed during the intake stroke and before bottom dead center. If the pressure in the exhaust duct 4 is higher than the pressure in the cylinders 3, exhaust gas flows from the exhaust duct 4 into the cylinders 3. The amount of the recirculated exhaust gas depends on the pressure difference between the exhaust duct 4 and the cylinders 3, the duration of the period of time between the exhaust valve reopening and closing, and on the variable valve overlap. The exhaust valves 13 can be kept open even until the piston has passed bottom dead center. When the EGR from the exhaust duct 4 is in use and before the exhaust valves 13 are closed for terminating the exhaust gas recirculation, pressurized water is injected through injector 11 into the exhaust port 4a for cooling the recirculated exhaust gas. The injected water also increases the heat capacity of the cylinder filling and reduces the oxygen concentration in the combustion chamber.

According to the invention, when the EGR from the exhaust duct 4 is in use, the by-pass valve 7 is used for regulating the amount of the recirculated exhaust gas. When the amount of the recirculated exhaust gas needs to be increased and the pressure in the intake duct 2 downstream from the compressor 5b of the turbocharger 5 is higher than the pressure in the exhaust duct 4 upstream from the turbine 5a of the turbocharger 5, the by-pass valve 7 is opened for introducing air from the intake duct 2 into the exhaust duct 4 to increase the pressure in the exhaust duct 4. In addition, the amount of the recirculated exhaust gas can be regulated by adjusting the valve overlap, and therefore also the amount of the exhaust gas that is trapped within the cylinder 3 at the end of the exhaust stroke. When high EGR rate is needed, the valve overlap of the exhaust and intake valves can be minimized. By adjusting the EGR rate by variable valve overlap and the by-pass valve 7, it is not necessary to use very early intake valve closing. There is thus no need to compromise the power output of the engine 1, or to increase the charge pressure, which would lead to increased SFOC. The invention helps in achieving low NOx emissions together with good fuel efficiency.

The engine 1 can be operated in different operating modes, which can be selected according to the applied NOx emission limits. The method according to the invention comprises at least a first operating mode, which is a low NOx mode, and a second operating mode, which is a standard NOx mode. The first operating mode can be used when very low NOx emission limits are applied, for instance when the engine is operated in an area, where IMO Tier III requirements are in force. The second operating mode can be used when the NOx emission limits are less strict than in the first operating mode, for instance in an area, where IMO Tier II requirements are in force. The two basic operating modes are shown in table 1. Different valve overlap durations are used in different operating modes, and in the first operating mode, the amount of the recirculated exhaust gas is additionally adjusted by using the air by-pass valve 7.

**Table 1. Operating modes for areas with different NOx emission limits.**

| | Low NOx area | Standard NOx area |
|---|---|---|
| Valve overlap | Short | Long |
| Air by-pass | In use (except for at very low loads) | Not in use |
| Miller timing | Very early | Very early at high loads, gradually reduced at lower loads |
| Exhaust valve reopening | In use | Not in use |
| Water injection | In use | Not in use |

In the first operating mode, the Miller timing is in use, and the intake valves 12 are thus closed during the intake stroke before bottom dead center for lowering the pressure in the cylinders 3. The valve overlap is shorter than in the standard NOx mode. Exhaust valves 13 are reopened after closing of the intake valves 12 for internal EGR. Water injection into the exhaust ports 4a is in use for reducing the temperature of the recirculated exhaust gas. The air by-pass valve 7 is used for additional adjustment of the amount of the recirculated exhaust gas. In the second operating mode, the valve overlap duration is longer than in the first operating mode. Better scavenging is thus achieved, and the amount of the exhaust gas that is trapped within the cylinders 3 is smaller than in the first operating mode. The exhaust valve reopening is not in use, and thus the air by-pass valve 7 is not needed for regulating the amount of recirculated exhaust gas and the water injection is not used. Also in the second operating mode, Miller timing can be used, but at lower loads the intake valves 12 are closed later than at high loads.

In tables 2 and 3 are shown in more detail different control strategies for operating the engine 1. The valve timing is defined assuming that the valve event happens when the valve lift is 1 % of the engine bore. It should be noted that the crank angles and the load ranges given in the tables are only indicative, and should not be taken as strictly limiting values. Suitable operating parameters for the engine 1 are selected according to the emission regulations and the engine load. Table 2 shows those operating modes that are used when the engine 1 is operated in an area where strict NOx emission limits, such as IMO Tier III requirements are in force. When Tier III requirements are applied, only very low NOx emissions are allowed. It is thus important to minimize the NOx emissions. However, the negative effect of the NOx reduction on the fuel efficiency should be minimized.

**Table 2. Control strategies for the engine when very low NOx emission limits are applied.**

| Load | | Very low load (0-25%) | Low load (25-50%) | Part load (50-75%) | High Load (75-100%) |
|---|---|---|---|---|---|
| Valve overlap | Short overlap (-5-15°CA) | | | | |
| | Intermediate overlap (15-35°CA) | | | | |
| | Long overlap (35-55°CA) | | | | |
| Inlet valve closing / Miller timing (VIC) | Late (-15-15°CA bBDC) | | | | |
| | Intermediate (30-60°CA bBDC) | | | | |
| | Early (60-90°CA bBDC) | | | | |
| Exhaust valve reopening | Reopening in use | | | | |
| ABP | ABP in use | | | | |

In an IMO Tier III area, the engine 1 can be operated in a first operating mode. The engine operating parameters can be adjusted according to the load. When the engine 1 is operated at a high load, such as at a load that is 75 percent or more of the full load, an intermediate valve overlap is used. The valve overlap can be, for instance, 15-35 degrees of crank angle. Some exhaust gas is therefore trapped within the cylinder 3 at the end of the exhaust stroke, but the thermal load is kept at an acceptable level. Miller timing with early intake valve closing is used for reducing the pressure in the cylinder 3 during the intake stroke. The intake valve closing time can be, for instance, 60-90 degrees of crank angle before bottom dead center (BDC). The by-pass valve 7 is used for regulating the air flow from the intake duct 2 into the exhaust duct 4 to adjust the pressure in the exhaust duct 4 (air by-pass, ABP). The pressure in the exhaust duct 4 is kept at a suitable level to achieve the desired EGR rate. If the exhaust gas flow from the exhaust port 4a into the cylinders 3 is too small, more air can be introduced from the intake duct 2 into the exhaust duct 4 to increase the pressure difference between the exhaust duct 4 and the cylinders 3. Short valve overlaps increase the surge risk of the turbocharger 5, and the by-pass valve 7 is also used for preventing surging.

When the engine is operated at part or low load and the load range is, for instance, 25-75 percent of the full load, short valve overlap is used. The overlap can be, for instance, -5-15 degrees of crank angle. Minimal scavenging is thus used. The intake valve closing timing can be the same as at high load. The by-pass valve 7 is used for regulating the air flow from intake duct 2 into the exhaust duct 4 to adjust the pressure in the exhaust duct 4. The pressure in the exhaust duct 4 is kept at a suitable level to achieve the desired EGR rate. Maximal EGR rate can be achieved with these operating parameters.

The engine can be operated also in a third operating mode, in which operating mode the by-pass valve 7 is kept closed for preventing air flow from the exhaust duct 4 into the intake duct 2. The third operating mode can be used when the engine 1 is operated at a very low load, for instance at a load that is less than 25 percent of the full load. The by-pass valve 7 can be kept closed, since there is no surge risk at such low loads. Also in the third operating mode, the valve overlap duration is short, and minimal scavenging is thus used. The intake valve closing timing can be the same as when the engine is operated at higher loads.

In the first and the third operating modes the EGR from the exhaust duct 4 is in use. The NOx reducing effect of the EGR is further enhanced by injecting water into the exhaust duct 4. The water is injected into the exhaust duct 4 before the exhaust valves 13 are closed for terminating the exhaust gas recirculation. The injected water evaporates and reduces cylinder temperature. Because of the injection into the exhaust duct 4, the water mixes well with the intake air and exhaust gas and does not disturb combustion. The injected water also helps to keep the exhaust valves 13 clean. The starting crank angle for the water injection depends on the crank angles at which the exhaust valves 13 are opened and closed. Also the engine load and speed affect the optimum crank angle for starting the injection and the crank angle range over which the water is injected. High engine load requires longer injection duration than lower engine loads. The water injection can be started even before the exhaust valves 13 are reopened for the exhaust gas recirculation. This enables longer water injection duration. If the exhaust valves 13 are kept open over BDC, the water injection can also take place partly during the compression stroke.

**Table 3. Control strategies for the engine when standard NOx limits are applied.**

| Load | | Very low load (0-25%) | Low load (25-50%) | Part load (50-75%) | High Load (75-100%) |
|---|---|---|---|---|---|
| Valve overlap | Short overlap (-5-15°CA) | | | | |
| | Intermediate overlap (15-35°CA) | | | | |
| | Long overlap (35-55°CA) | | | | |
| Inlet valve closing / Miller timing (VIC) | Late (-15-15°CA bBDC) | | | | |
| | Intermediate (30-60 °CA bBDC) | | | | |
| | Early (60-90 °CA bBDC) | | | | |
| Exhaust valve reopening | Reopening in use | | | | |
| ABP | ABP in use | | | | |

When higher NOx emission limits are applied, such as in an area where IMO Tier II limits are in force, the engine 1 can be operated in the second operating mode. In the second operating mode, long valve overlap duration is used. The overlap duration is longer than in the first and the third operating modes. In the second operating mode, the by-pass valve 7 is kept closed except for when it is necessary to allow air flow from the intake duct 2 into the exhaust duct 4 to prevent surging of the turbocharger 5. Also the reopening mode of the exhaust valves 13 is switched off, and the exhaust valves 13 are thus not opened during the intake stroke for allowing EGR from the exhaust duct 4. In the second operating mode, the amount of the recirculated exhaust gas is thus minimized. The intake valve closing timing can be selected according to the engine load. When the engine load is high, earlier intake valve closing timing is used. At a high load, for instance when the engine load is at least 75 percent of the full load, the intake valves can be closed 60-90 degrees of crank angle before BDC. At part load, the closing timing can be 30-60 degrees of crank angle before BDC. At a low or very low load, the intake valves can be closed -15-15 degrees of crank angle before BDC. With the second operating mode, low SFOC can be achieved.

It will be appreciated by a person skilled in the art that the invention is not limited to the embodiments described above, but may vary within the scope of the appended claims.

## Claims

1. A method for operating an internal combustion engine (1), which engine (1) comprises
- an intake duct (2) for introducing intake air into the cylinders (3) of the engine (1),
- an exhaust port (4a) for each cylinder (3) of the engine (1) for guiding the exhaust gas from the cylinders (3) into an exhaust duct (4),
- at least one turbocharger (5), which comprises a turbine (5a) and a compressor (5b),
- at least one intake valve (12) for each cylinder (3) of the engine (1) for opening and closing flow communication between the intake duct (2) and the cylinder (3),
- at least one exhaust valve (13) for each cylinder (3) of the engine (1) for opening and closing flow communication between the exhaust port (4a) and the cylinder (3),
- a by-pass duct (6), which is connected to the intake duct (2) downstream from the compressor (5b) of the turbocharger (5) and to the exhaust duct (4) upstream from the turbine (5a) of the turbocharger (5), and
- a by-pass valve (7) for regulating air flow in the by-pass duct (6),
which method comprises at least two different operating modes, and in at least one operating mode
- the intake valves (12) are closed during the intake stroke before bottom dead center for lowering the pressure in the cylinders (3),
- internal exhaust gas recirculation (EGR) from the exhaust duct (4) is used by reopening the exhaust valves (13) after the closing of the intake valves (12) and before bottom dead center for allowing exhaust gas recirculation from the exhaust duct (4) into the cylinders (3), and
- water is injected into the exhaust ports (4a) for cooling the recirculated exhaust gas,
**characterized in that** different valve overlap durations are used in different operating modes for regulating the amount of the exhaust gas that is trapped within the cylinders (3) and in at least one operating mode the by-pass valve (7) is utilized for regulating the amount of the exhaust gas that is recirculated during the exhaust valve reopening.

2. A method according to claim 1, **characterized in that** when the amount of the recirculated exhaust gas needs to be increased and the pressure in the intake duct (2) downstream from the compressor (5b) of the turbocharger (5) is higher than the pressure in the exhaust duct (4) upstream from the turbine (5a) of the turbocharger (5), the by-pass valve (7) is opened for introducing air from the intake duct (2) into the exhaust duct (4) to increase the pressure in the exhaust duct (4).

3. A method according to claim 1 or 2, **characterized in that** the method comprises a first operating mode, in which operating mode the exhaust valve reopening is in use, a first valve overlap duration is in use, and the by-pass valve (7) is used for regulating air flow from the intake duct (2) into the exhaust duct (4) to adjust the pressure in the exhaust duct (4).

4. A method according to claim 3, **characterized in that** the first operating mode is used when very low NOx emission limits are applied.

5. A method according to claim 3 or 4, **characterized in that** the method comprises a second operating mode, in which operating mode the exhaust valve reopening is not in use, the valve overlap duration is longer than in the first operating mode, and the by-pass valve (7) is kept closed.

6. A method according to claim 5, **characterized in that** the second operating mode is used when the NOx emission limits are less strict than when the first operating mode is used.

7. A method according to claim 5 or 6, **characterized in that** the method comprises a third operating mode, in which operating mode the exhaust valve reopening is in use, a first valve overlap duration is in use, and the by-pass valve (7) is kept closed.

8. A method according to claim 7, **characterized in that** the third operating mode is used at low engine loads when very low NOx emission limits are applied.

## Patentansprüche

1. Verfahren zum Betreiben einer Verbrennungskraftmaschine (1), wobei die Kraftmaschine (1) Folgendes umfasst:
- eine Ansaugleitung (2) zum Einleiten von Ansaugluft in die Zylinder (3) der Kraftmaschine (1),
- eine Auslassöffnung (4a) für jeden Zylinder (3) der Kraftmaschine (1) zum Leiten des Abgases aus den Zylindern (3) in eine Abgasleitung (4),
- wenigstens einen Turbolader (5), der eine Turbine (5a) und einen Verdichter (5b) umfasst,
- wenigstens ein Einlassventil (12) für jeden Zylinder (3) der Kraftmaschine (1) zum Öffnen und Schließen der Strömungsverbindung zwischen der Ansaugleitung (2) und dem Zylinder (3),
- wenigstens ein Auslassventil (13) für jeden Zylinder (3) der Kraftmaschine (1) zum Öffnen und Schließen der Strömungsverbindung zwischen der Auslassöffnung (4a) und dem Zylinder (3),
- eine Umgehungsleitung (6), die stromabwärts von dem Verdichter (5b) des Turboladers (5) mit der Ansaugleitung (2) und stromaufwärts von der Turbine (5a) des Turboladers (5) mit der Abgasleitung (4) verbunden ist, und
- ein Umgehungsventil (7) zum Regulieren des Luftstroms in der Umgehungsleitung (6),
wobei das Verfahren wenigstens zwei unterschiedliche Betriebsmodi umfasst und in wenigstens einem Betriebsmodus:
- die Einlassventile (12) während des Ansaugtakts vor dem unteren Totpunkt geschlossen werden, um den Druck in den Zylindern (3) zu senken,
- interne Abgasrückführung (AGR) aus der Abgasleitung (4) verwendet wird, durch das erneute Öffnen der Auslassventile (13) nach dem Schließen der Einlassventile (12) und vor dem unteren Totpunkt, um eine Abgasrückführung aus der Abgasleitung (4) in die Zylinder (3) zu ermöglichen, und
- Wasser in die Auslassöffnungen (4a) eingespritzt wird, um das zurückgeführte Abgas zu kühlen,
**dadurch gekennzeichnet, dass** in unterschiedlichen Betriebsmodi unterschiedliche Ventilüberdeckungsdauern verwendet werden, um die Menge des Abgases, die innerhalb der Zylinder (3) eingeschlossen wird, zu regulieren, und in wenigstens einem Betriebsmodus das Umgehungsventil (7) verwendet wird, um die Menge des Abgases, die während der erneuten Auslassventilöffnung zurückgeführt wird, zu regulieren.

2. Verfahren nach Anspruch 1, **dadurch gekennzeichnet, dass**, wenn die Menge des zurückgeführten Abgases gesteigert werden muss und der Druck in der Ansaugleitung (2) stromabwärts von dem Verdichter (5b) des Turboladers (5) größer ist als der Druck in der Abgasleitung (4) stromaufwärts von der Turbine (5a) des Turboladers (5), das Umgehungsventil (7) geöffnet wird, um Luft aus der Ansaugleitung (2) in die Abgasleitung (4) einzuleiten, um den Druck in der Abgasleitung (4) zu steigern.

3. Verfahren nach Anspruch 1 oder 2, **dadurch gekennzeichnet, dass** das Verfahren einen ersten Betriebsmodus umfasst, wobei in diesem Betriebsmodus die erneute Auslassventilöffnung in Gebrauch ist, eine erste Ventilüberschneidungsdauer in Gebrauch ist und das Umgehungsventil (7) verwendet wird, um den Luftstrom aus der Ansaugleitung (2) in die Abgasleitung (4) zu regulieren, um den Druck in der Abgasleitung (4) einzustellen.

4. Verfahren nach Anspruch 3, **dadurch gekennzeichnet, dass** der erste Betriebsmodus verwendet wird, wenn sehr niedrige NOₓ-Emissionen angewendet werden.

5. Verfahren nach Anspruch 3 oder 4, **dadurch gekennzeichnet, dass** das Verfahren einen zweiten Betriebsmodus umfasst, wobei in diesem Betriebsmodus die erneute Auslassventilöffnung nicht in Gebrauch ist, die Ventilüberschneidungsdauer länger ist als in dem ersten Betriebsmodus und das Umgehungsventil (7) geschlossen gehalten wird.

6. Verfahren nach Anspruch 5, **dadurch gekennzeichnet, dass** der zweite Betriebsmodus verwendet wird, wenn die NOₓ-Emissionsgrenzen weniger streng sind, als wenn der erste Betriebsmodus verwendet wird.

7. Verfahren nach Anspruch 5 oder 6, **dadurch gekennzeichnet, dass** das Verfahren einen dritten Betriebsmodus umfasst, wobei in diesem Betriebsmodus die erneute Auslassventilöffnung in Gebrauch ist, eine erste Ventilüberschneidungsdauer in Gebrauch ist und das Umgehungsventil (7) geschlossen gehalten wird.

8. Verfahren nach Anspruch 7, **dadurch gekennzeichnet, dass** der dritte Betriebsmodus bei niedrigen Kraftmaschinenlasten verwendet wird, wenn sehr niedrige NOₓ-Emissionen angewendet werden.

## Revendications

1. Procédé pour faire fonctionner un moteur à combustion interne (1), lequel moteur (1) comprend :
- un conduit d'admission (2) pour introduire de l'air d'admission dans les cylindres (3) du moteur (1),
- un orifice d'échappement (4a) pour chaque cylindre (3) du moteur (1) pour guider le gaz d'échappement depuis les cylindres (3) jusqu'à l'intérieur d'un conduit d'échappement (4),
- au moins un turbocompresseur (5) qui comprend une turbine (5a) et un compresseur (5b),
- au moins une soupape d'admission (12) pour chaque cylindre (3) du moteur (1) pour ouvrir et fermer une communication de flux entre le conduit d'admission (2) et le cylindre (3),
- au moins une soupape d'échappement (13) pour chaque cylindre (3) du moteur (1) pour ouvrir et fermer une communication de flux entre l'orifice d'échappement (4a) et le cylindre (3),
- un conduit de dérivation (6) qui est raccordé au conduit d'admission (2) en aval du compresseur (5b) du turbocompresseur (5) et au conduit d'échappement (4) en aval de la turbine (5a) du turbocompresseur (5), et
- une soupape de dérivation (7) pour réguler un flux d'air dans le conduit de dérivation (6),
lequel procédé comprend au moins deux modes de fonctionnement différents, et dans au moins un mode de fonctionnement,
- les soupapes d'admission (12) sont fermées pendant la course d'admission avant le point mort bas pour réduire la pression dans les cylindres (3),
- une recirculation interne de gaz d'échappement (RGE) du conduit d'échappement (4) étant utilisée grâce à la réouverture des soupapes d'échappement (13) après la fermeture des soupapes d'admission (12) et avant le point mort bas pour permettre la recirculation du gaz d'échappement depuis le conduit d'échappement (4) jusqu'à l'intérieur des cylindres (3), et
- de l'eau étant injectée dans les orifices d'échappement (4a) pour refroidir le gaz d'échappement de recirculation,
**caractérisé en ce que** différentes durées de chevauchement de soupape sont utilisées dans différents modes de fonctionnement pour réguler la quantité de gaz d'échappement qui est piégée à l'intérieur des cylindres (3), et dans au moins un mode de fonctionnement, la soupape de dérivation (7) étant utilisée pour réguler la quantité de gaz d'échappement qui est soumis à une recirculation pendant la réouverture de la soupape d'échappement.

2. Procédé selon la revendication 1, **caractérisé en ce que**, lorsque la quantité de gaz d'échappement soumis à la recirculation doit être augmentée et que la pression dans le conduit d'admission (2) en aval du compresseur (5b) du turbocompresseur (5) est plus élevée que la pression dans le conduit d'échappement (4) en aval de la turbine (5a) du turbocompresseur (5), la soupape de dérivation (7) est ouverte pour introduire de l'air depuis le conduit d'admission (2) jusqu'à l'intérieur du conduit d'échappement (4) pour augmenter la pression dans le conduit d'échappement (4).

3. Procédé selon la revendication 1 ou 2, **caractérisé en ce que** le procédé comprend un premier mode de fonctionnement, dans lequel mode de fonctionnement la réouverture de la soupape d'échappement est en cours d'utilisation, une première durée de chevauchement de soupape étant en cours d'utilisation, et la soupape de dérivation (7) étant en cours d'utilisation pour réguler un flux d'air depuis le conduit d'admission (2) jusqu'à l'intérieur du conduit d'échappement (4) pour ajuster la pression dans le conduit d'échappement (4).

4. Procédé selon la revendication 3, **caractérisé en ce que** le premier mode de fonctionnement est utilisé lorsque des limites très basses d'émission de NOx sont appliquées.

5. Procédé selon la revendication 3 ou 4, **caractérisé en ce que** le procédé comprend un deuxième mode de fonctionnement, dans lequel mode de fonctionnement la réouverture de la soupape d'échappement n'est pas en cours d'utilisation, la durée de chevauchement de soupape étant plus longue que dans le premier mode de fonctionnement, et la soupape de dérivation (7) étant gardée fermée.

6. Procédé selon la revendication 5, **caractérisé en ce que** le deuxième mode de fonctionnement est utilisé lorsque les limites d'émission de NOx sont moins strictes que lorsque le premier mode de fonctionnement est utilisé.

7. Procédé selon la revendication 5 ou 6, **caractérisé en ce que** le procédé comprend un troisième mode de fonctionnement, dans lequel mode de fonctionnement la réouverture de la soupape d'échappement est en cours d'utilisation, une première durée de chevauchement de soupape étant en cours d'utilisation, et la soupape de dérivation (7) étant gardée fermée.

8. Procédé selon la revendication 7, **caractérisé en ce que** le troisième mode de fonctionnement est utilisé à faibles charges du moteur lorsque des limites très basses d'émission de NOx sont appliquées.
